(19) Europäisches Patentamt
European Patent Office
Office européen des brevets

(11) EP 0 650 991 B1

(12) **EUROPEAN PATENT SPECIFICATION**

(45) Date of publication and mention of the grant of the patent:
**17.03.1999 Bulletin 1999/11**

(51) Int Cl.[6]: **C08G 18/54**, C08G 18/16
// (C08G18/54, 101:00)

(21) Application number: **94117024.3**

(22) Date of filing: **27.10.1994**

(54) **Process for production of polyurethane foam**

Verfahren zur Herstellung von Polyurethan-Schaumstoffen

Procédé de préparation de mousse de polyuréthane

(84) Designated Contracting States:
**DE FR GB**

(30) Priority: **02.11.1993 JP 297253/93**

(43) Date of publication of application:
**03.05.1995 Bulletin 1995/18**

(73) Proprietor: **NISSHINBO INDUSTRIES, INC.**
**Chuo-ku, Tokyo 103 (JP)**

(72) Inventors:
- **Imashiro, Yasuo, c/o Nisshinbo Industries, Inc.**
**Adachi-ku, Tokyo 123 (JP)**
- **Okutani, Tatsuya, c/o Nisshinbo Industries, Inc.**
**Adachi-ku, Tokyo 123 (JP)**
- **Nagata, Kazuhisa, c/o Nisshinbo Industries, Inc.**
**Adachi-ku, Tokyo 123 (JP)**

(74) Representative: **Laufhütte, Dieter, Dr.-Ing. et al**
**Lorenz-Seidler-Gossel**
**Widenmayerstrasse 23**
**80538 München (DE)**

(56) References cited:
**EP-A- 0 590 638**
**FR-A- 2 046 987**
**GB-A- 1 268 440**
**US-A- 4 448 951**
**US-A- 4 454 253**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Background of the Invention

(1) Field of the Invention

The present invention relates to a process for producing a polyurethane foam. More particularly, the present invention relates to a process for producing a polyurethane foam, which uses no blowing agent such as fluorine-containing halogenated hydrocarbon and yet enables in-situ production of polyurethane foam by the use of, for example, a spray foaming machine.

(2) Prior Art

Rigid polyurethanes have been applied to buildings by in-situ spray foaming, for the purpose of the moisture condensation prevention and heat insulation of said buildings. The foaming solutions heretofore used for production of polyurethane foam contain a fluorine-containing halogenated hydrocarbon as a blowing agent in an amount of about 15-40% by weight based on the foaming solution.

Patent document U.S. 4,448,951 discloses a process for the formation of polyurethane foams which are synthesized by reaction of modified benzyl ether-containing resole polyols with organic polyisocyanates. Water or volatile low boiling organic compounds, such as alkanes, oxygenated compounds or halogenated aliphatic compounds, such as fluorotrichlormethane or methylene dichlorid, or mixtures thereof are used as blowing agents in this process. The synthesis of high density polyurethane foams for game balls is described in U.S. patent 4,454,253. The formation of these high density polyurethane foams, which are particularly suitable for use in sports, is based on the reaction of hydroxyl-terminated liquid diene polymers with polyisocyanates in the presence of a tin and a tertiary amine catalyst using water or low boiling hydrocarbons such as dichlorodifluoromethane or dichlorofluoroethane as blowing agents.

The use of the fluorine-containing halogenated hydrocarbon, however, is said to be totally banned in near future in connection with the problem of ozone layer destruction.

Water is being investigated as a substitute for the fluorine-containing halogenated hydrocarbon. In using such a substitute blowing agent to achieve the same free rise density (e.g. 20 kg/$m^3$) as obtained with conventional blowing agents, about 40% of an isocyanate component used together with a polyol component is consumed for the formation of urea bond, inviting reduction in physical properties of foam obtained, such as reduction in adhesivity and occurrence of fragility.

Further, in using water as a blowing agent, there arises two-step foaming owing to the difference between (1) the reaction rate between isocyanate component and polyol component and (2) the reaction rate between isocyanate component and water, which tends to generate a gap between the foam produced and the surface of the material to which the foam is adhered; moreover, there arise problems which make difficult the control of spray foaming, such as increase in component ratio (ratio of NCO component and OH component) and increase in foaming solution viscosity.

Object and Summary of the Invention

The object of the present invention is to provide a process for producing a polyurethane foam, which is free from the above-mentioned problems of the prior art and which uses no fluorine-containing halogenated hydrocarbon as a blowing agent and yet enables in-situ production of polyurethane foam by the use of a spray foaming machine in any season of the year.

The present inventors paid attention to a fact that, as shown in the following reaction formula A, a phenol (1) having a hydroxymethyl group at the o-position, when reacted with an organic isocyanate (2) in the presence of an organotin type urethanization catalyst, generates carbon dioxide [e.g. Hybrid Phenolic/Urethane Foams, Anthony J. PaPa and Frank E. Critchfield, Journal of Cellular Plastics, 258, September/October (1979)]. Also, the present inventors tried to use a phenolic resin having hydroxymethyl groups at the o-position as a polyol component for formation of polyurethane foam and utilize the resulting carbon dioxide as a blowing agent for formation of foam.

Reaction formula A

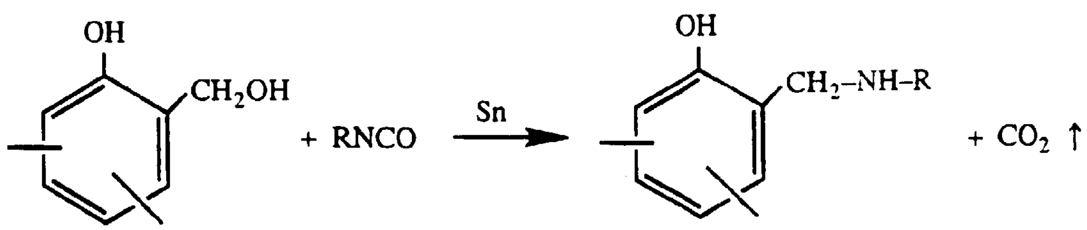


(1) (2)

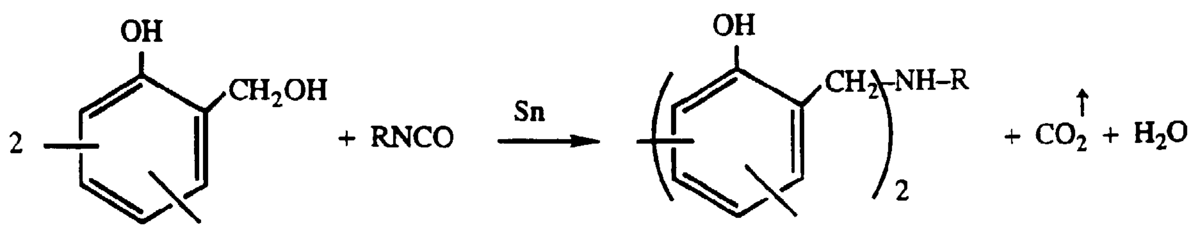


However, a novolac type phenolic resin (which is a phenolic resin having hydroxymethyl groups at the o-position) is generally solid and insoluble in solvents, and is therefore unusable as a polyol component. A resole type phenolic resin generally contains at least 20% of water; when the resin is used as a polyol for reaction with an isocyanate, a large proportion of said water reacts with the isocyanate, making it difficult to control the reaction. Reduction in water content of the resin invites an increase in the viscosity of the resin and incurring reduction in stirring efficiency. Hence, the present inventors found that a benzylic ether type phenolic resin having, for example, a water content of 0.5% or less and a viscosity of 1-20 Pa.s (1,000-20,000 cp) can be used as a polyol component in the production of polyurethane foam.

However, a study indicated that foaming is insufficient only with the carbon dioxide generated from the reaction between the hydroxymethyl groups of benzylic ether type phenolic resin and organic isocyanate and no desired foam of low density (high expansion ratio) can be obtained. Hence, the present inventors made further study and found out that by adding water as a foaming aid and further adding a tertiary amine type urethanization catalyst for the promotion of the reaction between water and isocyanate, it is possible to effectively utilize not only the above-mentioned reaction of formula A but also the urea bond formation reaction represented by the following reaction formula B (this reaction generates carbon dioxide as well) to produce an intended polyurethane foam of low density. The finding has led to the completion of the present invention.

Reaction formula B

$$R\text{-}NCO + H_2O \rightarrow RNH_2 + CO_2 \uparrow$$

$$R\text{-}NH_2 + R\text{-}NCO \rightarrow R\text{-}NH\ CONH\text{-}R$$

The present invention provides a process for producing a polyurethane foam, which comprises reacting a polyol component containing a benzylic ether type phenolic resin having hydroxymethyl groups with an organic polyisocyanate component in the presence of an organotin type urethanization catalyst, a tertiary amine type blowing catalyst and water.

Detailed Description of the Invention

The present invention is hereinafter described in detail.

The process for production of polyurethane foam according to the present invention is characterized by using, as at least part of the essential polyol component, a benzylic ether type phenolic resin having hydroxymethyl groups. Herein, the "benzylic ether type phenolic resin having hydroxymethyl groups" is a phenolic resin obtained by reacting phenol and aldehyde in the presence of a catalyst comprising, for example, a naphthenate or carboxylate of a bivalent metal, at 100-130°C; is a viscous liquid, a semisolid or a solid depending upon the polymerization conditions; and can be produced, for example, by the process described in Japanese Patent Publication No. 50873/1972.

The benzylic ether type phenolic resin having hydroxymethyl groups (hereinafter referred to simply as benzylic ether type phenolic resin, in some cases) can have a hydroxyl value of 300-700 mgKOH/g, preferably 450-600 mgKOH/g.

In the present invention, the benzylic ether type phenolic resin may be used as a single polyol component, but is preferably used in combination with other polyol because its use as a single polyol component gives a too rapid curing rate and the resulting foam has cracks inside. The other polyol usable is polyols conventionally used in production of polyurethane and includes, for example, dihydric alcohols such as ethylene glycol, diethylene glycol, neopentyl glycol, 1,4-butanediol, 1,6-hexanediol and 1,4-cyclohexanedimethanol; trihydric or higher alcohols such as glycerine, trimethylolpropane, tris(2-hydroxyethyl) isocyanurate and pentaerythritol; and polyester polyols, polyether polyols, ethylenediamine type polyols, ether type Mannich polyols all obtained from said polyhydric alcohols.

The above other polyols can be used singly or in combination of two or more. Of them, ethylenediamine type polyols and ether type Mannich polyols are particularly preferable.

When the other polyol is used in combination with the benzylic ether type phenolic resin, the amount of the benzylic ether type phenolic resin used is not particularly restricted and can vary in a wide range depending upon the desired properties of foam obtained, the kind of the other polyol used in combination. The amount, however, is generally 20-100% by weight, preferably 30-80% by weight based on the total amount of the polyols used.

Meanwhile, the organic polyisocyanate component to be reacted with the polyol component include polyisocyanate compounds of aliphatic type, alicyclic type, aromatic type and aralkyl type having at least two isocyanate groups (-NCO) in the molecule, conventionally used in production of polyurethane, and can be exemplified by aromatic polyisocyanates such as 2,4-tolylene diisocyanate, 2,6-tolylene diisocyanate, a mixture of 2,4-tolylene diisocyanate and 2,6-tolylene diisocyanate, crude tolylene diisocyanate, methylene diphenyl diisocyanate (MDI), 4,4',4"-triphenyl methylene triisocyanate and polymethylene polyphenyl isocyanate (crude MDI) and aliphatic polyisocyanates such as hexamethylene-1,6-diisocyanate and hydrogenated MDI. Of these, crude MDI is particularly preferable.

The proportion of the organic polyisocyanate component to the polyol component is preferably 1.0-1.5 in terms of (NCO equivalents)/(OH equivalents).

In the present invention, an organotin type urethanization catalyst is used in order to promote the reaction between the hydroxymethyl groups of the benzylic ether type phenolic resin and the isocyanate groups of the organic polyisocyanate component. The organotin type urethanization catalyst can be any organotin generally used in urethanization reaction and includes, for example, dibutyltin dilaurate, dibutyltin diacetate, dibutyltin dialkylmaleates, tin stearate and tin octylate. The amount of the organotin type urethanization catalyst used is not particularly restricted but is generally 0.1-14% by weight, preferably 0.4-9% by weight based on the benzylic ether type phenolic resin.

Also in the present invention, a tertiary amine type blowing catalyst is used in order to promote the reaction between water and isocyanate. The "blowing catalyst" refers to a catalyst having a reaction rate constant ratio $[(K_2/K_1) \times 10^{-1}]$ of 10 or more wherein $K_1$ and $K_2$ (L/mole x hr) are, respectively, a reaction rate constant between tolylene diisocyanate (TDI) and diethylene glycol and a reaction rate constant between TDI and water [e.g. Journal of Cellular Plastics, 23, 461(1987)], both in the presence of said catalyst, and includes, for example, bis-2-dimethylaminoethyl ether, N,N',N"-trimethylamine, ethylethanolamine and pentamethyldiethylenetriamine.

The amount of the tertiary amine type blowing catalyst used is appropriately 2-10% by weight based on the organic polyisocyanate. Use of, as the main catalyst, a catalyst having a reaction rate constant ratio $[(K_2/K_1) \times 10^{-1}]$ smaller than 10 gives rise to inconveniences such as increased foam density, lower reactivity in water, two-step foaming in some cases.

In the present invention, it is also possible to use as necessary, for the control of the reaction rate, other urethanization catalyst, in combination with the blowing catalyst, in an amount of 50% by weight or less, preferably 40% by weight or less based on the blowing catalyst. The other urethanization catalyst usable in combination includes, for example, tertiary amine type catalysts and derivatives thereof such as triethylenediamine, 2-methyltriethylenediamine, N,N-dimethylaminoethylmorpholine, 1-isobutyl-2-methylimidazole, 1,8-diazabicyclo[5,4,0]undecene-7 and 1,5-diazabicyclo[4, 3, 0]nonene-5 ; and organic acid metal salt type catalysts such as cobalt naphthenate, tetra(2-ethylhexyl) titanate, ferric 2-ethylhexoate, cobalt 2-ethylhexoate and zinc naphthenate.

In the present invention, water is used as a blowing aid. Since use of too large an amount of water tends to

produce a foam of fragility and low adhesivity, water is used in an amount of preferably 4% by weight or less, particularly preferably 2% by weight or less based on the organic polyisocyanate.

In the present invention, it is possible to add as necessary, for higher flame retardancy of foam obtained, a trimerization catalyst to form an isocyanurate. The trimerization catalyst usable includes, for example, tertiary amine type catalysts such as N,N',N"-tris(dimethylaminopropyl)hexahydro-S-triazine, and 2,4,6-trisdimethylaminomethylphenol and organic acid metal salt type catalysts such as potassium acetate, potassium octanoate, potassium 2-ethylhexoate, sodium carbonate and iron oxalate.

In the present invention, it is possible to as necessary add other additives which may be used in production of polyurethane foam. Such other additives include, for example, foam stabilizers such as adduct between dimethyl silicon and ethylene oxide or propylene oxide, cationic surfactant, anionic surfactant and nonionic surfactant; flame retardants such as tris(2,3-dibromopropyl) phosphate, tris(2-chloroethyl) phosphate, trimethyl phosphate, triethyl phosphate and tributyl phosphate and the like; viscosity-reducing agents such as dibutyl phosphate, dioctyl phosphate and polypropylene carbonate; fillers such as antimony trioxide, zeolite and percylite; and coloring agents such as pigment and dye.

The production of a polyurethane foam using the above-mentioned various components can be conducted, for example, by mixing all components other than an organic polyisocyanate component to prepare a polyol composition, adding the organic polyisocyanate component to the composition and mixing them, pouring the resulting mixture into a die or spraying the mixture on the surface of a substrate by the use of, for example, a spray foaming machine, and then allowing foaming and curing to take place. The time required for foaming and curing is generally about 5-30 seconds.

The present invention is described more specifically below by way of Examples.

Example 1

In a 750-ml container were weighed the following components:

10 g of a benzylic ether type phenolic resin having hydroxymethyl groups (hydroxyl value = 596 mgKOH/g),
27.25 g of an ethylene diamine type polyol (hydroxyl value = 315 mgKOH/g) (XR FD-5080, a product of Asahi Glass Co., Ltd.),
0.25 g of an organotin type urethanization catalyst (dibutyltin alkylmaleate) (T-52NJ, a product of Katsuta Kako K. K.),
2.75 g of a tertiary amine type blowing catalyst (bis-2-dimethylaminoethyl ether) (DABCO BL-19, a product of Sankyo Air Products K.K.),
0.75 g of a foam stabilizer (a silicon type),
8 g of a flame retardant (triethyl phosphate) (TEP, a product of Daihachi Kagaku K.K.), and
1 g of water.

The above components were subjected to preliminary stirring. Thereto was added 50 g of crude polymethylene polyphenyl isocyanate (crude MDI) (Millionate MR-200, a product of Nippon polyurethane Industry Co., Ltd.). The resulting mixture was violently stirred at room temperature for 1-2 seconds, at 2,000 rpm by the use of a cage type stirrer to allow foaming and curing to take place in a cup-free state.

The cream time and rise time, density (free rise density) of the foam obtained are shown in Table 1.

Using the above components, foam was obtained by the use of a Gasmer spray blowing machine. The spray foaming property, foam condition, adhesion strength and ratio of isolated cells are shown in Table 1.

Examples 2 to 18

The procedure of Example 1 was repeated using the components and amounts shown in Table 1, to produce polyurethane foams. The cream time and rise time in a cup-free state, density (free rise density), spray foaming property, foam condition, adhesion strength and ratio of isolated cells are shown in Table 1.

Incidentally, the spray foaming property, foam condition, adhesion strength and ratio of isolated cells in Table 1 were evaluated according to following yardsticks.

Spray foaming property

The applicability of spray foaming was evaluated according to the following three-stage yardsticks.

◎: Applicability is good (there is neither two-stage foaming nor sagging, and foaming is completed in a good

condition)
○ : Applicability is possible (two-stage foaming and sagging are seen slightly but there is no appearance problem)
× : Applicability is poor (there are two-stage foaming, and application is impossible)

Foam condition

Foam condition was evaluated according to the following three-stage yardsticks.

◎: Foam condition is good (there is neither shrinkage nor cracking)
○ : Foam condition has slight defect (shrinkage is seen slightly)
× : Foam condition is poor (there are shrinkage and cracking)

Adhesion strength

Spray foaming was conducted on a gypsum board, and the adhesion strength to the board was measured by a tensile test (JIS A 9256) and evaluated according to the following three-stage yardsticks.

◎: Adhesion strength is good (adhesion strength is 2 $Kgf/cm^2$ or more)
○ : Adhesion strength has slight problem (peeling is seen slightly and adhesion strength is 1 to less than 2 $Kgf/cm^2$)
× : Adhesion strength is bad (adhesion strength is less than 1 $Kgf/cm^2$)

Ratio of isolated cells

The condition of foams of foamed material was examined in terms of ratio of isolated cells and evaluated according to the following three-stage yardsticks. When the ratio of isolated cells is smaller, the foam material has a higher thermal conductivity and a lower heat-insulating effect.

◎: Cells are nearly isolated (ratio of isolated cells is 70% or more)
○ : Ratio of isolated cells is small (ratio of isolated cells is 40% to less than 70%)
× : Ratio of continuous cells is large (ratio of isolated cells is less than 40%)

Table 1-1

| | | Examples | | | | | | | | |
|---|---|---|---|---|---|---|---|---|---|---|
| | | 1 | 2 | 3 | 4 | 5 | 6 | 7 | 8 | 9 |
| Components | | | | | | | | | | |
| Crude MDI | | 50 | 50 | 50 | 50 | 50 | 50 | 50 | 50 | 50 |
| Benzylic ether type phenolic resin | | 10 | 26 | 20 | 10 | 10 | 10 | 10 | 10 | 35.1 |
| Polyols | | | | | | | | | | |
| | FD-5080 | 27.25 | 11.25 | 17.25 | 19 | 15 | 19 | 19 | 8.9 | - |
| | SO-200 | - | - | - | 7.5 | - | 8.2 | 7.5 | 17.35 | - |
| | Ar-3775 | - | - | - | - | 10.25 | - | - | - | - |
| Organotin type urethanization catalyst | | 0.25 | 0.25 | 0.25 | 0.25 | 0.25 | 0.25 | 0.25 | 0.25 | 0.25 |
| Blowing catalyst | | 2.75 | 2.75 | 2.75 | 2.00 | 2.75 | 2.00 | 2.00 | 2.75 | 2.75 |
| Other urethanization catalysts | | | | | | | | | | |
| | Polycat 77 | - | - | - | 0.75 | - | 0.4 | - | - | - |
| | DABCO 33 LV | - | - | - | - | - | 0.4 | 0.75 | - | - |
| Trimerization catalyst (NKC) | | - | - | - | 0.75 | - | - | 0.75 | - | - |
| Foam stabilizer | | 0.75 | 0.75 | 0.75 | 0.75 | 0.75 | 0.75 | 0.75 | 0.75 | 0.75 |

Table 1-1 (continued)

| | Examples | | | | | | | | |
|---|---|---|---|---|---|---|---|---|---|
| | 1 | 2 | 3 | 4 | 5 | 6 | 7 | 8 | 9 |
| Flame retardant | 8 | 8 | 8 | 8 | 10 | 8 | 8 | 8 | 11 |
| Water | 1 | 1 | 1 | 1 | 1 | 1 | 1 | 2 | 0.15 |
| Cream time (sec) | 2 | 2 | 2 | 2 | 1.5 | 1.5 | 1.5 | 2 | 3.5 |
| Rise time (sec) | 10 | 15 | 10 | 12 | 9 | 10 | 9 | 12 | 13 |
| Density (kg/m$^3$) | 25.0 | 12.0 | 23.0 | 24.5 | 25.0 | 25.0 | 21.0 | 15.0 | 15.6 |
| Foaming property | ◎ | ◎ | ◎ | ◎ | ◎ | ◎ | ◎ | ◎ | ◎ |
| Foam condition | ◎ | ○ | ◎ | ◎ | ◎ | ◎ | ◎ | ○ | ○ |
| Adhesion Strengh | ◎ | ◎ | ◎ | ◎ | ◎ | ◎ | ◎ | ◎ | ◎ |
| Ratio of isolated cells | ◎ | ○ | ○ | ◎ | ◎ | ◎ | ◎ | ◎ | ○ |

Table 1-2

| | | Examples | | | | | | | | |
|---|---|---|---|---|---|---|---|---|---|---|
| | | 10 | 11 | 12 | 13 | 14 | 15 | 16 | 17 | 18 |
| Components | | | | | | | | | | |
| Crude MDI | | 50 | 50 | 50 | 50 | 50 | 50 | 50 | 50 | 50 |
| Benzylic ether type phenolic resin | | 10 | 10 | 10 | 10 | 10 | 10 | 10 | 10 | 10 |
| Polyols | | | | | | | | | | |
| | FD-5080 | 28.5 | 29.0 | 27.25 | 27.35 | 15 | 27.25 | 27.25 | 19.0 | 29.0 |
| | SO-200 | - | - | - | - | - | - | - | 7.5 | - |
| | Ar-3775 | - | - | - | - | 10 | - | - | - | - |
| Organotin type urethanization catalyst | | 0.25 | 0.25 | 0.1 | 1.4 | 0.25 | 0.25 | *0.25 | *0.25 | *0.25 |
| Blowing catalyst | | 1.50 | 1.00 | 2.75 | 2.75 | 5.0 | *2.75 | 2.75 | *2.00 | *1.00 |
| Other urethanization catalysts | | | | | | | | | | |
| | Polycat 77 | - | - | - | - | - | - | - | 0.75 | - |
| | DABCO 33 LV | - | - | - | - | - | - | - | - | - |
| Trimerization catalyst (NKC) | | - | - | - | - | - | - | - | 0.75 | - |
| Foam stabilizer | | 0.75 | 0.75 | 0.75 | 0.75 | 0.75 | 0.75 | 0.75 | 0.75 | 0.75 |
| Flame retardant | | 8 | 8 | 8.15 | 6.75 | 8 | 8 | 8 | 8 | 8 |
| Water | | 1 | 1 | 1 | 1 | 1 | 1 | 1 | 1 | 1 |
| Cream time (sec) | | 3.5 | 4 | 2 | 2 | 1 | 2 | 2 | 2 | 4 |

* in Organotin type urethanization catalyst inducates dibutyltin dialkylmaleate is used (in other Examples, dibutyltin dialkyllaurate is used)

* In Blowing catalyst inducates bis-2-dimethylaminoethylether is used (in other Examples, pentamethylethylenetriamin is used)

Table 1-2 (continued)

| | Examples | | | | | | | | |
|---|---|---|---|---|---|---|---|---|---|
| | 10 | 11 | 12 | 13 | 14 | 15 | 16 | 17 | 18 |
| Rise time (sec) | 12 | 13 | 12 | 9 | 10 | 9 | 8 | 10 | 12 |
| Density (kg/m3) | 35.0 | 28.8 | 31.0 | 32.5 | 23.7 | 25.8 | 26.4 | 25.5 | 30.2 |
| Foaming property | ◎ | ◎ | ◎ | ◎ | ◎ | ◎ | ◎ | ◎ | ◎ |
| Foam condition | ○ | ○ | ○ | ◎ | ◎ | ◎ | ◎ | ◎ | ○ |
| Adhesion Strengh | ◎ | ○ | ◎ | ◎ | ◎ | ◎ | ◎ | ◎ | ◎ |
| Ratio of isolated cells | ◎ | ○ | ○ | ○ | ◎ | ◎ | ◎ | ○ | ○ |

FD-5080 = ethylenediamine type polyol, SO-200 - sorbitol type polyol
Ar-3775 = Mannich type polyol
Polycat 77 = N-methyl-N,N'-bis(3-dimethylaminopropylamine)
DABCO 33LV = diethyleneglycol solution containing 33% of triethyl diamine
NKC = glycerine solution containing 33% of potassium octylate

Comparative Examples 1 to 6

The procedure of Example 1 was repeated using the components and amounts shown in Table 2, to produce a polyurethane foam. The cream time and rise time in a cup-free state, density (free rise density), spray foaming property, foam condition, adhesion strength and ratio of isolated cells are shown in Table 2. The spray foaming property, foam condition, adhesion strength and ratio of isolated cells in Table 2 were evaluated according to following yardsticks.

Table2

| | | Comparative Examples | | | | | |
|---|---|---|---|---|---|---|---|
| | | 1 | 2 | 3 | 4 | 5 | 6 |
| Components | | | | | | | |
| Crude MDI | | 50 | 50 | 50 | 50 | 50 | 50 |
| Benzylic ether type phenolic resin | | - | 4 | 10 | 10 | 10 | 10 |
| Polyols | | | | | | | |
| | FD-5080 | 30.12 | 26.32 | 30 | 27.5 | 29.25 | 29 |
| | SO-200 | - | 7.53 | - | - | - | - |
| | Ar-3775 | 7.53 | - | - | - | - | - |
| Organotin type urethanization catalyst | | 0.50 | 0.50 | 0.25 | 2.75 | - | 0.25 |
| Blowing catalyst | | 2.68 | 2.68 | - | - | - | 0.5 |
| Other urethanization catalysts | | | | | | | |
| | Polycat 77 | - | - | - | - | - | - |
| | DABCO 33LV | - | - | - | - | - | - |
| Trimerization catalyst (NKC) | | 1.08 | 1.08 | - | - | 1 | 0.5 |
| Foam stabilizer | | 0.75 | 0.75 | 0.75 | 0.75 | 0.75 | 0.75 |
| Flame retardant | | 5.66 | 5.66 | 8.00 | 8.00 | 8.00 | 8.00 |
| Water | | 1.68 | 1.48 | 1 | 1 | 1 | 1 |
| Cream time (sec) | | 7 | 6 | 7 | 5 | 5 | 5 |
| Rise time (sec) | | 36 | 28 | 19 | 12 | 15 | 14 |
| Density ($kg/m^3$) | | 25.0 | 25.2 | 31.6 | 32.5 | 33.3 | 28.3 |

Table2 (continued)

| Comparative Examples | | | | | | |
|---|---|---|---|---|---|---|
| | 1 | 2 | 3 | 4 | 5 | 6 |
| Foaming property | × | × | × | ○ | ○ | ○ |
| Foam condition | ○ | ○ | ○ | × | × | ○ |
| Adhesion Strengh | × | × | ○ | ○ | ○ | ○ |
| Ratio of isolated cells | ◎ | ◎ | × | × | × | × |
| Organotin type urethanization catalyst = dibutyltin dialkylmaleate<br>Blowing catalyst = bis-2-dimethylaminoethylether | | | | | | |

As is appreciated from Table 1, the foams according to the present invention are superior to the foams according to Comparative Examples, in properties, particularly in adhesion strength.

According to the process of the present invention, by appropriately using a benzylic ether type phenolic resin, an organotin type urethanization catalyst, a tertiary amine type blowing catalyst and water , the resulting foam can have a desired expansion ratio, for example, a high free rise density of 40 kg/m$^3$ or less, particularly 30 kg/m$^3$ or less.

In the polyurethane foam produced by the present process, the low adhesivity and fragility (these have been the problems of conventional foams obtained by water foaming) can be alleviated. Further in the present process, by only adding about 10% of a flame retardant as a viscosity-reducing agent, a foaming solution of $1{\cdot}10^{-1}$ - $5{\cdot}10^{-1}$ Pa.s (100-500 cp) can be prepared easily and a foam of high expansion ratio can be produced. Meanwhile, when it is desired to achieve a high expansion ratio by spray foaming based on conventional water foaming, with the component ratio (ratio of NCO component and OH component) fixed at 1:1, it is necessary to make high the proportion of water in OH component (a large amount of water must be added); as a result, other OH component need be a polyol of high hydroxyl value, i.e. a polyol of high molecular weight; in order to reduce the resulting high viscosity, a viscosity-reducing agent (e.g. flame retardant) must be added in a large amount. As a result, there arises reduction in strength and adhesivity of foam obtained.

## Claims

1. A process for producing a polyurethane foam, which comprises reacting a polyol component containing a benzylic ether type phenolic resin having hydroxymethyl groups with an organic polyisocyanate component in the presence of water,
   **characterized in that**

   the reaction is conducted in the presence of an organotin type urethanization catalyst and a tertiary amine type blowing catalyst and in the absence of a carbodiimidization catalyst;

   the proportion of the organotin type urethanization catalyst is 0.1-14% by weight based on the benzylic ether type phenolic resin;

   the proportion of the tertiary amine type blowing catalyst is 2-10% by weight based on the organic polyisocyanate,

   the proportion of water is 4% by weight or less based on the organic polyisocyanate,

   the benzylic ether type phenolic resin has a hydroxyl value of 300-700 mgKOH/g, and

   the proportion of the benzylic ether type phenolic resin having hydroxymethyl groups, contained in the polyol component is 20-100% by weight based on the polyol component.

2. A process according to Claim 1, wherein the proportion of the organic polyisocyanate component to the polyol component is 1.0-1.5 in terms of NCO equivalents/OH equivalents.

3. A process according to Claim 1, wherein the tertiary amine type blowing catalyst has a reaction rate constant ratio

[($K_2$/$K_1$) x $10^{-1}$] of at least 10.0 wherein $K_1$ and $K_2$ are, respectively, a reaction rate constant between tolylene diisocyanate and diethylene glycol and a reaction rate constant between tolylene diisocyanate and water, both in the presence of said tertiary amine type blowing catalyst.

**4.** A process according to Claim 3, wherein the tertiary amine type blowing catalyst contains other urethanization catalyst.

## Patentansprüche

**1.** Verfahren zur Herstellung eines Polyurethanschaumstoffs, welches das Umsetzen einer Polyol-Komponente, enthaltend ein Phenolharz vom benzylischem Ether-Typ mit Hydroxymethylgruppen, mit einer organischen Polyisocyanatkomponente in Gegenwart von Wasser umfaßt,
**dadurch gekennzeichnet, daß**

die Reaktion in Gegenwart eines Urethanisierungskatalysators vom Organozinn-Typ und eines Treibkatalysators vom tertiären Amin-Typ und in Abwesenheit eines Carbodiimidisierungskatalysators durchgeführt wird;

der Anteil des Urethanisierungskatalysators vom Organozinn-Typ 0,1 - 14 Gew.-%, bezogen auf das Phenolharz vom benzylischem Ether-Typ, ist;

der Anteil des Treibkatalysators vom tertiären Amin-Typ 2 - 10 Gew.-%, bezogen auf das organische Polyisocyanat, ist;

der Anteil an Wasser 4 Gew.-% oder weniger, bezogen auf das organische Polyisocyanat, ist;

das Phenolharz vom benzylischem Ether-Typ eine Hydroxylzahl von 300 - 700 mg KOH/g besitzt; und

der Anteil des Phenolharzes vom benzylischem Ether-Typ mit Hydroxymethylgruppen, der in der Polyol-Komponente enthalten ist, 20 - 100 Gew.-%, bezogen auf die Polyol-Komponente, beträgt.

**2.** Verfahren gemäß Anspruch 1, wobei das Verhältnis der organischen Polyisocyanat-Komponente zu der Polyol-Komponente 1,0 - 1,5 hinsichtlich der NCO-Äquivalente/OH-Äquivalente ist.

**3.** Verfahren gemäß Anspruch 1, wobei der Treibkatalysator vo tertiären Amin-Typ ein Verhältnis der Reaktionskonstanten [($K_2$/$K_1$) x $10^{-1}$] von mindestens 10,0 aufweist, wobei $K_1$ bwz. $K_2$ die Reaktionskonstante zwischen Tolylendiisocyanat und Diethylenglykol und die Reaktionskonstante zwischen Tolylendiisocyanat und Wasser ist, beide in Gegenwart des Treibkatalysators vom tertiären Amin-Typ.

**4.** Verfahren gemäß Anspruch 3, wobei der Treibkatalysators vom tertiären Amin-Typ anderen Urethanisierungskatalysator enthält.

## Revendications

**1.** Procédé de production d'une mousse de polyuréthane, qui comprend la réaction d'un composant polyol contenant une résine phénolique du type éther benzylique ayant des groupes hydroxyméthyles avec un composant organique polyisocyanate en présence d'eau,
caractérisé en ce que

la réaction est menée en présence d'un catalyseur d'uréthanisation du type organoétain et d'un catalyseur de gonflement du type amine tertiaire et en l'absence d'un catalyseur de carbodiimidisation ;

la proportion du catalyseur d'uréthanisation du type organoétain est de 0,1 à 14% en poids sur la base de la résine phénolique du type éther benzylique ;

la proportion de catalyseur de gonflement du type amine tertiaire est de 2 à 10% en poids sur la base du polyisocyanate organique,

la proportion d'eau est de 4% en poids ou moins sur la base du polyisocyanate organique,

la résine phénolique du type éther benzylique a une valeur hydroxyle de 300 à 700 mgKOH/g, et

la proportion de la résine phénolique du type éther benzylique ayant les groupes hydroxyméthyles, contenue dans le composant polyol est de 20 à 100% en poids sur la base du composant polyol.

**2.** Procédé selon la revendication 1, dans lequel la proportion du composant polyisocyanate organique au composant polyol est de 1,0 à 1,5 en termes d'équivalents NCO/équivalents OH.

**3.** Procédé selon la revendication 1 dans lequel le catalyseur de gonflement du type amine tertiaire a un rapport de constante de vitesse de réaction $[(K_2/K_1)x10^{-1}]$ de moins 10,0 où $K_1$ et $K_2$ sont, respectivement, la constante de vitesse réactionnelle entre le tolylène, diisocyanate et le diéthylène glycol et la constante de vitesse réactionnelle entre le tolylène diisocyanate et l'eau, tous deux en présence d'un catalyseur de gonflement du type amine tertiaire.

**4.** Procédé selon la revendication 3, dans lequel le catalyseur de gonflement du type amine tertiaire contient un autre catalyseur d'uréthanisation.